# EUROPEAN PATENT APPLICATION

(11) **EP 3 392 209 A1**
(43) Date of publication of application: **24.10.2018**
(21) Application number: 17167525.9
(22) Date of filing: 21.04.2017
(51) Int. Cl.: C02F 9/00, B01D 33/06, C02F 1/00, C02F 1/52, C02F 101/20

(54) **FLUID TREATMENT PLANT**

(71) Applicant: Chemical Equipment Scandinavia AB, 264 39 Klippan (SE)
(72) Inventor: THOMASSON, Bengt, 264 92 KLIPPAN (SE); GAPINSKI, Tomasz, 267 38 BJUV (SE); PÅLSSON, Oskar, 264 32 KLIPPAN (SE); HALLBERG, Håkan, 264 31 KLIPPAN (SE); LUNDFELT, Mikael, 254 40 HELSINGBORG (SE); SVENSSON, Magnus, 267 77 EKEBY (SE); ENGSTRÖM, Thomas, 253 42 VALLÅKRA (SE)
(74) Representative: AWA Sweden AB

(57) **Abstract**

Disclosed is a fluid treatment plant (1), comprising a plant inlet (10) for incoming fluid for treatment; a first portion (20) for fluid purification treatment; a second portion (30) for separation of waste from purified fluid generated by said purification treatment; and a plant outlet (40) for purified fluid. The first portion (20) comprises at least three containers, a first, a second and a third container (210, 220, 230) each having a bottom wall (214, 224, 234), a top (212, 222, 232) and enclosing side walls, and the second portion (30) comprises at least one filtration device (31). According to the invention, the first, second and third containers (210, 220, 230) are in fluid connection and arranged in series; the side walls of each of the first, second and third container (210, 220, 230) form a hexagonal or an octagonal cross section; and each of said first, second and third container (210, 220, 230) has an agitator (215, 225, 235) arranged therein.

## Description

### Technical Field

The invention relates to fluid treatment plant, comprising a first portion for fluid purification treatment and a second portion for separation of waste from purified fluid.

### Background Art of the Invention

Fluid treatment plants for treating home, community and industrial waste water have been known for a long time. However, most often the removal of heavy metal from a fluid path is a delicate matter and many plants provides insufficient removal thereof. One approach is to install an ion-exchanger within the fluid path to catch the heavy metal, but this usually a significant investment and maintenance cost for the fluid treatment plant.

### Summary of the Invention

It is an objective of the present invention to provide an improved fluid treatment plant which is easy to install and to add to an already existing fluid treatment plant, and which also is compact and adjustable to available space for such an installation/addition.

Another objection of the present invention is to provide a plant which optimize the process of precipitating and building up binding the heavy metals, and which also may optimize the removal of the flocks.

These and other objectives, and/or advantages that will be apparent from the following description of embodiments, are achieved, in full or at least in part, by a fluid treatment plant, comprising a plant inlet for incoming fluid for treatment; a first portion for fluid purification treatment; a second portion for separation of waste from purified fluid, which waste is generated by said purification treatment; and a plant outlet for purified fluid. The first portion comprises at least three containers, a first, a second and a third container, and each of said first, second and third container has a bottom wall, a top and enclosing side walls. The second portion comprises at least one filtration device. According to the invention said first, second and third containers are in fluid connection and arranged in series, said side walls of each of the first, second and third container form a hexagonal or an octagonal cross section; and each container has an agitator arranged therein.

In one embodiment the side walls of each container form an octagonal cross section.

Having side walls forming a hexagonal or an octagonal cross section have advantages in that thorough agitation within the whole cross section of the container is achieved without having to apply excessive mixing within the containers or without having to arrange baffles in the side walls of the containers. During the fluid purification treatment, the build-up of complexes and flocculant is a delicate matter, and excessive mixing or arrangement with baffles in the side walls may be detrimental to this build-up. However, having the side walls forming a hexagonal or an octagonal cross section no stationary zones within the cross section rises, and a gentle but still effective agitation may be accomplished within the containers to keep the flocks moving within the container.

Having the side walls forming an octagonal cross section may further provide the advantage of being able to positioning the different containers in a space efficient manner in relation to each other and to adjust the positioning thereof to the available footprint for the fluid treatment plant.

In one embodiment said first container is connected to said second container by a first supply duct. This first supply duct has a first inlet in fluid connection with an outlet of said first container arranged in a side wall close to the top of the first container and has an outlet in fluid connection with an inlet of said second container arranged in a side wall adjacent the bottom wall of said second container.

In another embodiment said second container is connected to said third container by a second supply duct. This second supply duct has an inlet in fluid connection to an outlet of said second container at a side wall close to the top of the second container and has an outlet in fluid connection to an inlet of said third container at a side wall adjacent the bottom wall of said third container.

In a further embodiment, the fluid treatment plant comprises a mixing container arranged upstream of said first container. This mixing container has an outlet in fluid communication with an inlet of said first container arranged in a side wall adjacent the bottom wall of said first container.

In one embodiment the first supply duct has a second inlet for treatment chemicals, which second inlet may be arranged close to the first inlet of said first supply duct.

In another embodiment the second supply duct has a second inlet for treatment chemicals, which second inlet is arranged close to the first inlet of said second supply duct.

In a further embodiment the third container has an outlet arranged in a side wall close to the top of said third container. This outlet is arranged with a spill-away overflow wall, which is vertically adjustable along lateral guiding elements.

In one embodiment the at least one filtering device comprises a microfilter, and it may comprise a rotary filter. The outlet of the third container is arranged in fluid connection with an inlet to the filter device. By providing a direct and short distance between the outlet of the third container and the starting of the removal of the waste in form of flocks from the fluid, the waste removal is optimized, and the disintegration of the build flocks are minimized.

In one embodiment a pH meter(s) is/are arranged in said first and/or said second container. A pH meter may also be arranged in said plant outlet to check pH in purified fluid.

In an even further embodiment a buffer container is arranged between said plant inlet and said mixing container. By arranging a buffer container between plant inlet and the actual start of the treatment of the fluid, fluctuating amount of incoming fluid may be compensated. Further, the flow through the plant may be stopped for a specific time period without having to close the plant inlet. Accordingly, this provides the possibility for short maintenance of for adjustments in the purification treatment without stopping incoming fluid to the plant. In one embodiment the buffer container has, apart from fluid connection with the plant inlet and the mixing container, also a further outlet. This further outlet is only for use if the buffer container for some reason has been filled up.

In one embodiment, the agitator arranged in said third container is a paddle agitator. The agitator in said second container may also be a paddle agitator. Especially in the third container it is of utter most importance that the stirring of the fluid is made with care not to break or disturb the growing flocks within this container. Further, the flocks needs to be in movement all the time within the container. However, within the second container the precipitation and growing particles binding waste, especially heavy metals, from the fluid is also a delicate matter. Thus, also in the second container a paddle agitator may be of advantage.

In one embodiment, the plant is arranged on a mobile platform. As such, the plant is arranged to easily be transported and connected to on-site existing fluid treatment plant as an extra purification step. The fluid treatment plant according to the invention is fully equipped, and ready to plug in and start running with as short preparation time as possible.

In a further embodiment, the fluid treatment plant comprises a control unit, and this control unit is arranged to control the running of plant and may be monitored off site and/or on site.

In one embodiment, a flowmeter is arranged in connection with the inlet to the mixing container or in connection with the inlet to the first container. Further, in one embodiment a pump is arranged between the buffer tank and the mixing container, or between the buffer tank and the first container, or between the plant inlet and the mixing container, or between the plant inlet and the first container.

In one embodiment an agitator is arranged in the buffer tank to ensure that no sedimentation is built up in a lower part of the buffer tank.

In one embodiment the control unit may be arranged to monitor the flowmeter, and arranged to monitor the pH meter(s), and also to control the addition of treatment chemicals to the fluid treatment plant at the different inlets within the plant.

Further a visual detection system may be arranged in the top of the third container, and may also be arranged in the top of the second container. These visual detection systems may then be connected to the control unit for further monitoring and/or controlling of the running of the fluid treatment plant. Such a visual detection system, may in one embodiment comprise a camera, for taking and collecting images of the flocks within the container, which images may be used for off-site monitoring and controlling of the fluid treatment plant, but may also involve an automatic visual detection system for automatic monitoring and controlling of the fluid treatment plant. Such monitoring is especially important in order to optimized the addition of treatment chemicals and to adjust to the fluctuations of waste within the fluid entering into the fluid treatment plant.

In even a further embodiment said fluid treatment plant may comprise a loading station, which is arranged downstream of said second part for loading waste from the fluid treatment plant into waste containers for disposal. The waste containers may be bags, or sludge containers/tanks for intermittent emptying and transport for dumping. When using semipermeable bags as waste containers, these bags enables further dewatering of the waste. The fluid recovered from the bags with waste is recirculated back into the fluid treatment plant. In one embodiment the recirculated fluid is introduced in the first or second container.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

As used herein, the term "comprising" and variations of that term are not intended to exclude other additives, components, integers, or steps.

As used herein, the term "*close to*" in the expression "*an inlet arranged in a sidewall close to the top of..."* means that the inlet is positioned in the sidewall adjacent the top or at least within the ¼ upper part of the sidewall of the container, preferably at least within the 1/5 upper part of the sidewall of the container.

As used herein, the term "*adjacent*" in the expression "*an outlet in fluid connection with an inlet of said second*/*third container arranged in a side wall adjacent the bottom wall of the second*/*third contained"* means that the inlet of the second/third container is positioned in a side wall as close as possible to the bottom wall thereof, not leaving any threshold in the side wall.

As used therein "waste" means materials to be removed from the fluid. After the purification treatment the waste comprises flocks comprising e.g. the heavy metals.

### Brief Description of the Drawings

The above, as well as additional objects, features and advantages of the present invention, will be better understood through the following illustrative and non-limiting detailed description of embodiments of the present invention, with reference to the appended drawings, where the same reference numerals will be used for similar elements, and wherein:
Fig. 1 is an illustrative perspective view of a fluid treatment plant according to an embodiment of the invention
Fig. 2 is an illustrative perspective view of the fluid treatment plant of Fig. 1 from the opposite side.
Fig. 3 is an illustrative perspective view of a first portion of a fluid treatment plant according to one disclosed embodiment of the invention.
Fig.4 is a cross-sectional perspective view of the first portion of the fluid treatment plant shown in Fig 3.
Fig. 5 is an enlarged view of a paddle agitator arranged in at least one of the containers within a fluid treatment plant according to one embodiment of the invention.

### Detailed Description of Preferred Embodiments of the Invention

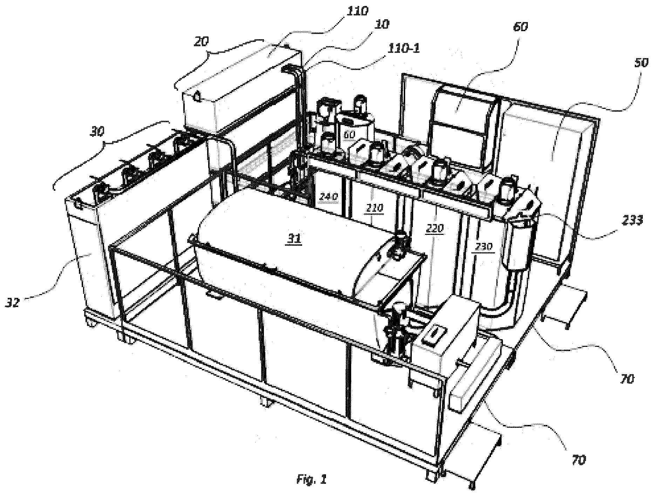

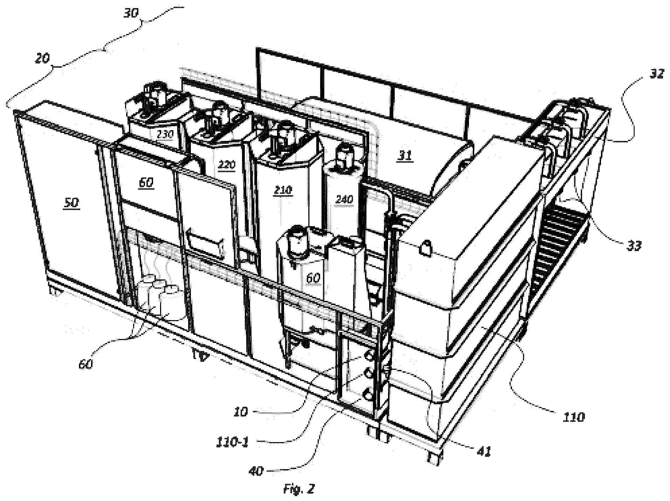

Figs. 1 and 2 illustrate an exemplary fluid treatment plant 1 comprising a plant inlet 10 for incoming fluid for treatment; a first portion 20 for fluid purification treatment; a second portion 30 for separation of waste from purified fluid; and a plant outlet 40 for purified fluid.

The first portion 20 comprises three containers, a first 210, a second 220 and a third 230. The first portion 20 further comprises a mixing container 240 arranged upstream of the first container 210.

The second portion 30 comprises a rotary filter 31, and loading station 32 arranged downstream of the rotary filter 31.

The illustrated exemplary fluid treatment plant 1 of Figs. 1 and 2 further comprises a control unit 50 and reservoirs 60 for the treatment chemical added to the fluid treatment plant during operation. As shown in Fig. 1, the reservoirs may comprise canisters for refilling/exchanging. However, the treatment chemicals may also be provided from tanks/reservoirs arranged with piping/pumping arrangement into the fluid treatment plant.

The illustrated exemplary fluid treatment plant 1 of Figs. 1 and 2 further comprises a buffer container 110, which is arranged between said plant inlet 10 and said mixing container 240. An agitator may be arranged in the buffer container 110. By arranging a buffer container between plant inlet and the actual start of the treatment of the fluid, fluctuating amount of incoming fluid may be compensated for as well as for intermittent maintenance stops. The buffer container 110 is in fluid connection with the mixing container 240 by a supply pipe 111. A pump 112 and a flow meter 113 are arranged in the supply pipe 111, and one or more valves 114, 115 are arranged in the supply pipe 111. In the illustrated exemplary fluid treatment plant 1 of Fig. 1 and 2, a first valve 114 is positioned in the supply pipe 111 between the buffer container 110 and the pump 112, and a second valve 115 is arranged between the pump 112 and the inlet 241 to the mixing container 240. With these valves 114, 115 the flow through the plant may be stopped for a specific time period without having to close the plant inlet 10. Accordingly, this provides the possibility for short maintenance of for adjustments in the purification treatment without stopping incoming fluid to the plant 1.

Further, the supply pipe 111 may further have one or more inlets 116, 117 arranged before the pump 112, and may further have one or more inlets 118, 119 arranged before the inlet 241 of the mixing container 240. These inlets 116, 117, 118, 119 are arranged for the addition of treatment chemicals.

As illustrated in Figs. 1 and 2 all the different parts of the fluid treatment plant 1 are arranged on one or more mobile platforms 70 enabling easy movement of the plant 1 as discussed above.

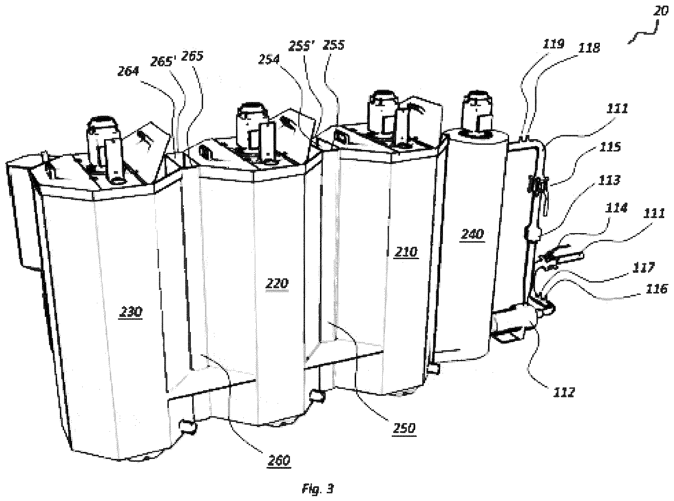

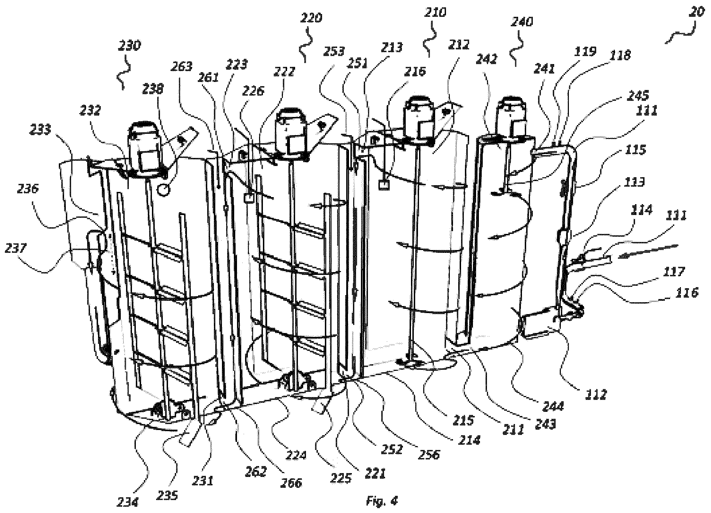

Figs. 3 and 4 illustrate an exemplary first part 20 of the fluid treatment plant. The shown first part 20 comprises the mixing container 240, which is the container used to prepare mixing of incoming fluid and treatment chemicals. This mixing container 240 has in this illustrative example a cylindrical form with an inlet 241 arranged in a side wall close to a top 242 thereof, and an outlet 243 arranged in a sidewall adjacent the bottom wall 244. An agitator 245 is arranged in the mixing container 240 for enabling thorough mixing of the incoming fluid and the treatment chemicals.

The first part 20 further comprises three containers 210, 220, 230, each having enclosing sidewalls and each having a top 212, 222, 232 and a bottom wall 214, 224, 234. The sidewalls of said first, second and third container 210, 220, 230, are arranged to provide an octagonal cross section. Further, each of said first, second and third containers 210, 220, 230, has an inlet 211, 221, 231 arranged in a side wall adjacent the bottom wall 214, 224, 234 of each first, second and third containers 210, 220, 230, respectively. Further, each of said first and second container 210, 220 has an outlet 213, 223 arranged in a sidewall close to the top 212, 222 of each first and second containers 210, 220. The third container 230 has an outlet 233 arranged in a side wall close to the top 232 of the third container 230, and this outlet 233 is arranged as a spill-away overflow wall 236. The spill-away overflow wall 236 is vertically adjustable along lateral guiding elements 237.

The mixing container 240 is arranged in series with the first container 210, and the mixing container 240 is in fluid connection with the first container 210 via the outlet 243 of the mixing container 240 and an inlet 211 of the first container 210.

Between the first container 210 and the second container 220 a first supply duct 250 is arranged, and this first supply duct 250 is arranged between adjacent sidewalls of said first and second container 210, 220. This first supply duct 250 connects the first and second container 210, 220 by having a first inlet 251 connected to the outlet 213 of the first container 210, and an outlet 252 connected to the inlet 221 of the second container 220.

Between the second container 220 and the third container 230, a second supply duct 260 is arranged, and this second supply duct 260 is arranged between adjacent sidewalls of said second and third container 210, 220. This second supply duct 260 connects the second and third container 220, 230 by having a first inlet 261 connected to the outlet 223 of the second container 220, and an outlet 262 connected to the inlet 231 of the third container 230.

In the shown embodiment, the first supply ducts 250 is arranged as channel formed by sidewalls from the adjacent first and second containers, 210, 220, and additionally two sidewalls 255, 255' joining the first and second containers 210, 220. In a similar way the second supply ducts 260 is arranged as a channel formed by sidewalls from the adjacent second and third containers, 220, 230, and additionally two sidewalls 265, 265' joining the second and third containers 220, 230. Bottom walls 256, 266 are arranged to enclose the bottoms of said first and second supply duct 250, 260.

By arranging the supply duct in this way, a compact and easy positioned first portion 20 of the fluid treatment plant 1 may be provided. The octagonal form of the first, second and third container 210, 220, 230 may further be arranged in a row, as shown in Figs. 1-4, but may also be arranged angled to each other, in which the second container 220 forms the corner of the three containers arranged in series. This arrangement is advantageous when the available length/width of the foot print of the fluid treatment plant needs to be minimized. Thus, not only provides the octagonal form and advantage to the mixing conditions therein, it also provides a form which enables compact and easy positioning of the different containers to each other.

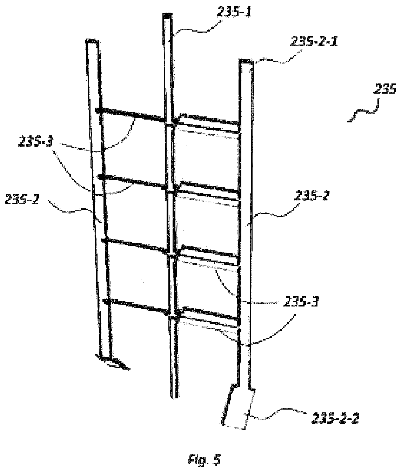

Each of the first, second and third container 210, 220, 230 comprises an agitator 215, 225, 235, for stirring and mixing the fluid entering each container, respectively. The agitator 215 in the first container 210 is in one embodiment and propeller agitator, like the agitator 245 arranged in the mixing container 240. However, the agitators 225, 235 arranged in the second and the third containers 220, 230, are preferably paddle agitators, especially in the third container 230. In the second and the third container 220, 230 it is of outer importance that the stirring/mixing is made with caution not to destroy the build-up of precipitates and flocks which catches and binds the waste material to be removed from the fluid. In Fig. 5, and example of a preferred paddle agitator is shown. Such paddle agitator is preferably used in the third container 230, and maybe also in the second container 220. The paddle agitator has a centrally arranged shaft 235-1, and at least two baffles 235-2 arranged in parallel with and at a radial distance from the shaft 235-1. At least two connection baffles 235-3 are arranged between each of the baffles 235-2 and the shaft 235-1. In the shown embodiment four connection baffles 253-3 are arranged between each of the baffles 235-2 and the shaft 235-1. The baffles 235-2 have one top part 235-2-1 and one bottom part 235-2-2 each. The bottom parts 235-2-2 have an increased surface area and form an angle between the baffle 235-2 and the bottom part 235-2-2. This bent lower part 235-2-2 of the baffles 235-2 ensures proper stirring at the bottom wall 234 of the third container 230. The same is true for the paddle agitator 225 of the second container 220. The connection baffles 235-3 are preferably angled in such a way that a paddle surface thereof pushes the fluid comprising the flocks in front of it and slightly awards when the paddle agitator 235 turns around the shaft 235-1. The paddle agitator 225 of the second container 220 have the same features and advantages.

As shown in Fig. 3 and 4, the first supply duct 250 may have a second inlet 253 arranged close to the first inlet 251. In the shown embodiment the second inlet 253 is arranged in a top 254 of the first supply duct 250.

Further, the second supply duct 260 also may have a second inlet 263 arranged close to the first inlet 261. In the shown embodiment the second inlet 263 is arranged in a top 264 of the second supply duct 260. These second inlets 253, 263 of the first and second supply duct 250, 260, are arranged for supplying treatment chemicals for the fluid purification treatment.

The outlet 233 of the third container 230 is in fluid connection with the second portion 30, and more particularly to the filter device 31. The filter device 31 is preferably a microfilter, and most preferably a rotary filter comprising a microfilter.

A shown in Figs. 1 and 2, the fluid treatment plant 1 further comprises a loading station 32, which is arranged downstream of the filter device 31, and this loading station 32 may, as in the shown embodiment comprise a series of bag loading positions 33, in which the waste removed in the filter device 31, is collected in semi-permeable bags (not shown) and dewatered even further. The filled bags are thereafter sealed and removed for dumping. The recovered fluid from the bag loading station is recirculated into the fluid treatment plant, and preferably to the first or the second container 210, 220. In another embodiment the waste removed in the filter device 31 is pumped further to a sludge container/tank for intermittent emptying and transport for dumping.

The illustrative exemplary fluid treatment plant 1 may further have pH meters 216, 226, 41 arranged to monitor and control the fluid treatment. Such pH meter(s) 216, 226 may be arranged in the first and/or the second container(s) 210, 220. The pH meter(s) 216, 226 is/are arranged in the top of the container(s) 210, 220, and may be arranged to send continuous information of pH value of the fluid contained in the first and/or second container 210, 220 to the control unit 50. This to control the amount of added treatment chemicals into the fluid stream of the fluid treatment plant. In one embodiment, pH adjusting agent is added to the fluid stream in one inlet 118, 119 of the supply pipe 111, and in another embodiment the pH adjusting agent is added in the second inlet 253 of the first supply duct 250. Such pH adjusting agent may be anyone of NaOH, H₂SO₄, HCl, and H₂CO₃.

A pH-meter 41 may also be arranged in the outlet 40 of the fluid treatment plant 1.

The control unit 50 further adjust and control the addition of the other treatment chemicals. In the inlets 116, 117, 118, 119 one or more precipitation chemicals are added. Such precipitation chemicals are chosen for example from the group of FeCl₂, FeCl₃, AlCl₃, poly-aluminium chloride (PAC), and heavy metal chelating agent, such as trimercapto-s-triazine trisodiumsalt (TMT), , or mixtures thereof. In one embodiment the precipitation chemicals are added in the second inlet 253 of the first supply duct 250.

The control unit 50 may further monitor the flow meter 113 to ensure proper addition of treatment chemicals.

The control unit 50 may further adjust and control the addition in the second inlet 263 of the second supply duct 260, in which a treatment chemical in form of a flocculant/clarifying agent is preferably added. In an alternative embodiment the flocculant is added already in the second inlet 253 of the first supply duct 250. Examples of flocculant/clarifying agent is are water-soluble organic polymers, such as a cationic polyelectrolyte flocculant agent, and an anionic polyelectrolyte flocculant agent, but also non-ionic polyelectrolyte flocculant agent may be used.

In one embodiment a visual detection system 238 is arranged in the top 232 of the third container 230, and this visual detection system 238 is preferably connected to the control unit 50 for monitoring and/or controlling the build-up of flocks within this third container 230. In its simplest embodiment it is a digital camera providing and collecting images of the flocks within the container. As stated above these images may be used for off-site monitoring and controlling of the fluid treatment plant, but may also involve an automatic visual detection system for automatic monitoring and controlling of the fluid treatment plant. Such a visual detection system may also be arranged in the second container 220.

### Example

An example of a fluid treatment process within the inventive fluid treatment plant 1 is disclosed below for further understanding of the present invention.

The incoming fluid is typically a fluid comprising flue gas condensate comprising among others heavy metals from a district heating plant.

The fluid enters the plant via the plant inlet 10 and into a top part of the buffer container 110, which buffer container in one embodiment may hold up to about 2 m³. There after the fluid is pumped into the supply pipe 111, through valve 114 via the pump 112 and up through the flow meter 113, through the valve 115 and into the mixing container 240. Precipitation chemicals is added in inlet 116. pH adjusting agent is added in the inlet 117 right before entering the mixing container 240. This mixing container may hold approximate 0.2 m³. The agitator 215 in the mixing container 240 is vigorous mixing the fluid with the pH adjusting agent and the precipitation chemicals. Thereafter the mixed fluid enters out through the outlet 243 of the mixing container 240 and into the inlet 211 of the first container 210. This first container may hold approximate 0.5 m³. In this first container 210 the precipitation chemicals have time to react and start to build up particles binding the heavy metals from the fluid during agitation. From this first container 210, the fluid comprising the particulate material enters out through the outlet 213 and into the first supply duct 250 and travels downwardly to the bottom wall 256 of the first supply duct 250 and enters the second container 220 via the inlet 221 thereof. The second container 220 has a paddle agitator 225, and the fluid comprising the particulate material is stirred with a slow pace by the paddle agitator 225 to not cause disintegration of the particulate material. This second container 220 may hold approximate 0.5 m³.

In this second container 220 the particulate material continues to grow, and from this container the fluid with the particulate material enters out through the outlet 223 of the second container 220 and into the second supply duct 260. In this second supply duct 260, a flocculant is added through the second inlet 263 of the second supply duct 260. The fluid comprising the particulate material and the added flocculant travels down through the second supply duct 260 towards the bottom wall 266 of the second supply duct 260 and into the inlet 231 of the third container 230. Also the third container 230 has a paddle agitator 235, and the fluid comprising the particulate material and on-going build-up of flocks is stirred with a slow pace by the paddle agitator 235 not to cause disintegration of the flocks. Also this third container 230 may hold approximate 0.5 m³.

The build-up of flocks is monitored with the visual detection system 238 arranged in top 232 of the third container 230, and depending on the growth of the flocks, the spill-away overflow wall is adjusted in vertical direction to control adequate hydraulic retention time in order to ensure optimal size of flocks before the fluid with the flocks enter out of the third container 230 through the outlet 233 arranged in the side wall close to the top of the third container 230, and into the rotary filter device 31 of the second portion 30 of the fluid treatment plant. In the rotary filter device, the flocks are separated from the fluid, and the purified fluid enters out through the plant outlet 40. The flocks forming a sludge is pumped to the loading station 32 for collecting the sludge in bags, and further dewatering. The bags are sealed and removed for dumping. As earlier stated this loading station may very well comprise a container/tank for intermittent emptying and removal for dumping.

The skilled person realizes that a number of modifications of the embodiments described herein are possible without departing from the scope of the invention, which is defined in the appended claims.

For instance, in an alternative embodiment, said first and second supply duct 250, 260 may be arranged as piping arrangement between the outlet 213 of the first container 210 and the inlet 221 of the second container 220. In such an alternative embodiment, said second inlets 253, 263 of the first and the second supply duct 250, 260, respectively, may be arranged in the piping close to the outlets 213, 223.

## Claims

1. A fluid treatment plant (1), comprising a plant inlet (10) for incoming fluid for treatment; a first portion (20) for fluid purification treatment; a second portion (30) for separation of waste from purified fluid, which waste is generated by said purification treatment; and a plant outlet (40) for purified fluid; wherein said first portion (20) comprises at least three containers (210, 220, 230), a first, a second and a third container, said first, second and third container each having a bottom wall (214, 224, 234), a top (212, 222, 232) and enclosing side walls; and wherein said second portion (20) comprises at least one filtration device (31), **characterized in that,** said first, second and third containers (210, 220, 230) are in fluid connection and arranged in series; that said side walls of each said first, second and third container form a hexagonal or an octagonal cross section; and that each of said first, second and third container has an agitator (215, 225, 235) arranged therein.

2. The fluid treatment plant (1) according to claim 1, wherein said first container (210) is connected to said second container (220) by a first supply duct (250), which first supply duct has a first inlet (251) in fluid connection with an outlet (213) of said first container (210) arranged in a side wall close to the top (212) of the first container (210) and has an outlet (252) in fluid connection with an inlet (221) of said second container (220) arranged in a side wall adjacent the bottom wall (224) of said second container (220).

3. The fluid treatment plant (1) according to claim 1 or claim 2, wherein said second container (220) is connected to said third container (230) by a second supply duct (260), which second supply duct (260) has a first inlet (261) in fluid connection with an outlet (223) of said second container (220) arranged in a side wall close to the top (222) of the second container (220) and has an outlet (262) in fluid connection with an inlet (231) of said third container (230) arranged in a side wall adjacent the bottom wall (234) of said third container (230).

4. The fluid treatment plant (1) according to anyone of the preceding claims, further comprising a mixing container (240) arranged upstream of said first container (210), which mixing container (240) has an outlet (241) in fluid communication with an inlet (211) of said first container (210) arranged in a side wall adjacent the bottom wall (214) of said first container (210).

5. The fluid treatment plant (1) according to anyone of claims 2-4, wherein said first supply duct (250) has a second inlet (253) for treatment chemicals, which second inlet (253) is arranged close to said first inlet (251) of said first supply duct (250).

6. The fluid treatment plant according to anyone of claims 3-5, wherein said second supply duct (260) has a second inlet (363) for treatment chemicals, which inlet (263) is arranged close to the first inlet (261) of said second supply duct (260).

7. The fluid treatment plant (1) according to anyone of the preceding claims, wherein said third container (230) has an outlet (233) arranged in a side wall close to the top (232) of said third container (230), which outlet (233) is arranged with a spill-away overflow wall (236), which is vertically adjustable along lateral guiding elements (237).

8. The fluid treatment plant (1) according to anyone of the preceding claims, wherein said at least one filtering device (31) comprises a microfilter, and preferably arranged as a rotary filter.

9. The fluid treatment plant (1) according to anyone of the preceding claims, further comprising a control unit (50), which is arranged to control and monitor the fluid treatment plant (1) off site and/or on site.

10. The fluid treatment plant (1) according to anyone of the preceding claims, wherein a pH meter(s) (216, 226) is/are arranged in said first and/or said second container (210, 220).

11. The fluid treatment plant (1) according to anyone of the preceding claims, wherein a pH meter (41) is arranged in said plant outlet (40).

12. The fluid treatment plant (1) according to anyone of the claims 4-11, wherein a buffer container (110) is arranged between said plant inlet (10) and said mixing container (240).

13. The fluid treatment plant (1) according to anyone of the preceding claims, wherein the agitator (235) arranged in said third container (230) and optionally also the agitator (225) in said second container (220) is/are paddle agitator(s).

14. The fluid treatment plant (1) according to anyone of the preceding claims, wherein a visual detection system (238) is arranged in the top (232) of said third container (230).

15. The fluid treatment plant (1) according to anyone of the preceding claims, wherein said plant (1) is arranged on a mobile platform (70).
